# EUROPEAN PATENT APPLICATION

(11) **EP 2 902 667 A1**
(43) Date of publication of application: **05.08.2015**
(21) Application number: 13842678.8
(22) Date of filing: 05.09.2013
(51) Int. Cl.: F16H 61/02

(54) **AUTOMATIC TRANSMISSION EQUIPPED WITH FRICTION ELEMENT HAVING LOCKING MECHANISM ATTACHED THERETO, AND CONTROL METHOD THEREFOR**

(30) Priority: 26.09.2012 JP 2012212174
(71) Applicant: Jatco Ltd, Fuji-shi, Shizuoka 417-8585 (JP)
(72) Inventor: NAKANO, Yusuke, Fuji-shi Shizuoka 417-8585 (JP); KOBAYASHI, Katsuya, Fuji-shi Shizuoka 417-8585 (JP); MATSUMOTO, Kouzi, Fuji-shi Shizuoka 417-8585 (JP); IKEDA, Tomomasa, Fuji-shi Shizuoka 417-8585 (JP)
(74) Representative: Hoefer & Partner Patentanwälte mbB
(86) International application number: PCT/JP2013/073899
(87) International publication number: WO 2014/050483

(57) **Abstract**

A control unit for an automatic transmission determines whether or not a lock mechanism is in a locked condition when a non-travel mode is selected by a select switch, and does not supply an OFF pressure to a disengagement side oil chamber when it is determined that the lock mechanism is not in the locked condition.

## Description

### TECHNICAL FIELD

This invention relates to control of an automatic transmission including a friction element having a lock mechanism.

### BACKGROUND ART

A friction element operated by oil pressure is used as a clutch/brake of an automatic transmission in order to couple two coaxially disposed members (in the case of a clutch, both members are rotary elements, and in the case of a brake, one member is a rotary element and the other is a non-rotary element).

In this friction element, for example, a plurality of friction plates are attached respectively to the two members so as to be free to slide in an axial direction, and the friction plates of the two members are disposed alternately. When the friction plates of the two members are pressed against each other by a hydraulic piston, the two members are coupled via the friction plates (JP7-12221A).

### SUMMARY OF INVENTION

To keep the friction element described above in an engaged condition, a hydraulic pump must be operated in order to supply oil pressure to the hydraulic piston continuously, and as a result, fuel efficiency in a vehicle installed with the automatic transmission deteriorates.

To solve this problem, oil pressure may be supplied until the friction element is engaged, and after the friction element is engaged, movement of the hydraulic piston may be restricted by a lock mechanism. In so doing, the friction element can be maintained in the engaged condition even after the oil pressure decreases. Further, the lock mechanism may be released by supplying oil pressure for disengaging the friction element, and in so doing, the friction element can be maintained in a disengaged condition even after the oil pressure decreases. According to this configuration, oil pressure does not have to be supplied continuously to the hydraulic piston, and therefore a load on the hydraulic pump can be reduced, enabling a corresponding improvement in the fuel efficiency of the vehicle.

However, in an automatic transmission including a friction element having a lock mechanism, such as that described above, control is performed to set the friction element in the engaged condition by supplying an engagement pressure when a travel mode is selected and set the friction element in the disengaged condition by supplying a disengagement pressure when a non-travel mode is selected. Therefore, in a case where the travel mode and the non-travel mode of the transmission are selected repeatedly at short time intervals due to an erroneous operation or the like so that the non-travel mode is selected and the disengagement pressure is supplied before the lock mechanism is locked in the travel mode, a residual pressure of the disengagement pressure forms resistance to the engagement pressure supplied when the travel mode is selected subsequently, and as a result, engagement of the friction element is delayed.

This invention has been designed in consideration of the technical problem described above, and an object thereof is to provide an automatic transmission including a friction element having a lock mechanism, with which a delay in engagement of the friction element is prevented in a case where non-travel mode → travel mode → non-travel mode → travel mode are selected at short time intervals.

According to an aspect of this invention, an automatic transmission includes a friction element that is disposed on a power transmission path so as to be engaged when an ON pressure is supplied to an engagement side oil chamber, whereby a lock mechanism enters a locked condition, maintained in an engaged condition once the lock mechanism enters the locked condition even after an oil pressure in the engagement side oil chamber is reduced, disengaged when an OFF pressure is supplied to a disengagement side oil chamber while the lock mechanism is in the locked condition, whereby the lock mechanism enters an unlocked condition, and maintained in a disengaged condition even after an oil pressure in the disengagement side oil chamber is reduced, a select switch capable of selecting a travel mode or a non-travel mode as a mode of the automatic transmission, and a control unit configured to perform engagement control when the travel mode is selected by the select switch in order to set the lock mechanism in the locked condition by supplying the ON pressure to the engagement side oil chamber and then reduce the oil pressure in the engagement side oil chamber, and perform disengagement control when the non-travel mode is selected by the select switch in order to set the lock mechanism in the unlocked condition by supplying the OFF pressure to the disengagement side oil chamber and then reduce the oil pressure in the disengagement side oil chamber, wherein the control unit is configured to determine whether or not the lock mechanism is in the locked condition when the non-travel mode is selected by the select switch, and does not supply the OFF pressure to the disengagement side oil chamber when it is determined that the lock mechanism is not in the locked condition. A control method corresponding to the automatic transmission is also provided.

### BRIEF DESCRIPTION OF DRAWINGS

FIG. 1 is a schematic view showing a configuration of a vehicle including an automatic transmission according to an embodiment of this invention.
FIG. 2 is a sectional view of a forward clutch and a clutch operation pack used to operate the forward clutch.
FIG. 3 is a flowchart showing content of control executed by a transmission controller when a select switch is operated from a D mode to a mode other than the D mode.
FIG. 4 is a flowchart showing content of control executed by the transmission controller when the select switch is operated from a mode other than the D mode to the D mode.

### DESCRIPTION OF EMBODIMENTS

An embodiment of this invention will be described below with reference to the attached figures.

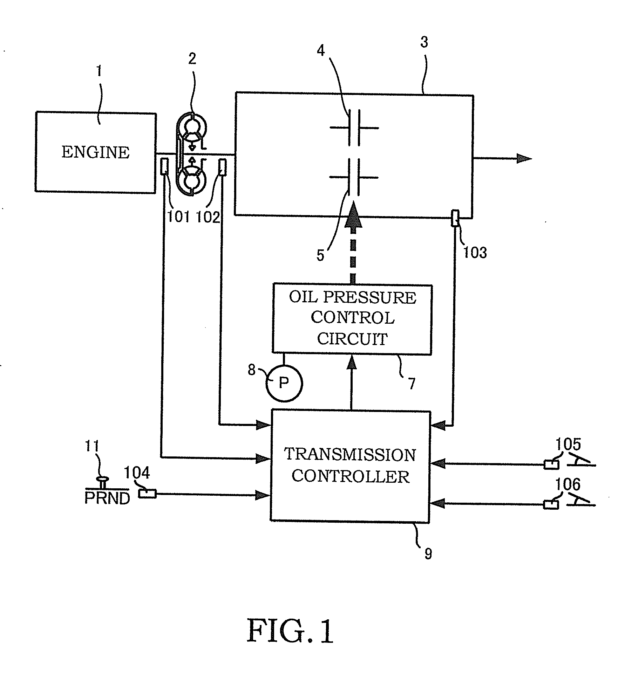

FIG. 1 is a schematic view showing a configuration of a vehicle including an automatic transmission according to an embodiment of this invention. The vehicle includes an engine 1, a torque converter 2, and a transmission 3, wherein output rotation of the engine 1 is transmitted to a drive wheel, not shown in the figures, via the torque converter 2, the transmission 3, and a differential gear unit, not shown in the figures.

The transmission 3 is a stepped or continuously variable automatic transmission. The transmission 3 includes a reverse brake 4 and a forward clutch 5. When the reverse brake 4 is engaged, the transmission 3 reverses the rotation of the engine 1 and outputs the reversed rotation, and when the forward clutch 5 is engaged, the transmission 3 outputs the rotation of the engine 1 while maintaining a rotation direction as is.

The reverse brake 4 is a conventional friction element that is engaged by supplying an engagement pressure, and that requires a continuous supply of the engagement pressure in order to remain in an engaged condition. The reverse brake 4 can be disengaged by stopping the supply of the engagement pressure.

As will be described below, the forward clutch 5 is a friction element having a lock mechanism BL. By supplying an ON pressure to the forward clutch 5 so that the lock mechanism BL is locked, the forward clutch 5 can be maintained in an engaged condition even when the supply of the ON pressure is stopped. The forward clutch 5 can be disengaged by supplying an OFF pressure to the forward clutch 5 in order to release the lock mechanism BL, and once the lock mechanism BL has been released, the forward clutch 5 can be maintained in a disengaged condition even when the supply of the OFF pressure is stopped. A configuration of the forward clutch 5 will be described in detail below.

It should be noted that when the reverse brake 4 and the forward clutch 5 are engaged simultaneously, the transmission 3 enters a so-called interlocking condition in which an output shaft thereof cannot rotate. Therefore, the reverse brake 4 and the forward clutch 5 are engaged alternately.

An oil pressure control circuit 7 includes a regulator valve that regulates oil pressure from a hydraulic pump 8 driven by the engine 1 to a line pressure, a solenoid valve that regulates oil pressure supplied to friction elements (when the transmission 3 is a continuously variable transmission, also constituent elements of a continuously variable speed change mechanism) including the forward clutch 5 using the line pressure as a source pressure, and oil passages connecting the hydraulic pump 8, the respective valves, and the respective friction elements.

The respective valves of the oil pressure control circuit 7 are controlled on the basis of control signals from a transmission controller 9. The transmission controller 9 is constituted by a CPU, a ROM, a RAM, an input/output interface, and so on. The transmission controller 9 determines a travel condition of the vehicle on the basis of various signals input from various sensors and an engine controller, and outputs commands to the oil pressure control circuit 7 to realize a gear position (a speed ratio when the transmission 3 is a continuously variable transmission) that is suitable for the travel condition.

Signals and the like from a rotation speed sensor 101 that detects a rotation speed Ne of the engine 1, a rotation speed sensor 102 that detects an input rotation speed of the transmission 3, an oil pressure sensor 103 that detects an oil pressure of working oil supplied from the oil pressure control circuit 7, an inhibitor switch 104 that detects a position of a select switch 11, an accelerator opening sensor 105 that detects an operation amount of an accelerator pedal (referred to hereafter as an "accelerator opening APO"), a brake switch 106 that detects an ON/OFF condition of a brake, and so on are input into the transmission controller 9.

The select switch 11 is a lever type switch or a button type switch, and by operating the lever or the button, one mode from among a parking mode (referred to as a "P mode" hereafter), a reverse mode (referred to as an "R mode" hereafter), a neutral mode (referred to as an "N mode" hereafter), and a drive mode (referred to as a "D mode" hereafter) can be selected as a mode of the transmission 3.

The transmission controller 9 engages or disengages the forward clutch 5 and the reverse brake 4 in accordance with the mode selected by the select switch 11. More specifically, in the D mode, the forward clutch 5 is engaged and the reverse brake 4 is disengaged. In the R mode, the forward clutch 5 is disengaged and the reverse brake 4 is engaged. In the P mode and the N mode, both the forward clutch 5 and the reverse brake 4 are disengaged.

Next, the configuration of the forward clutch 5 will be described in detail.

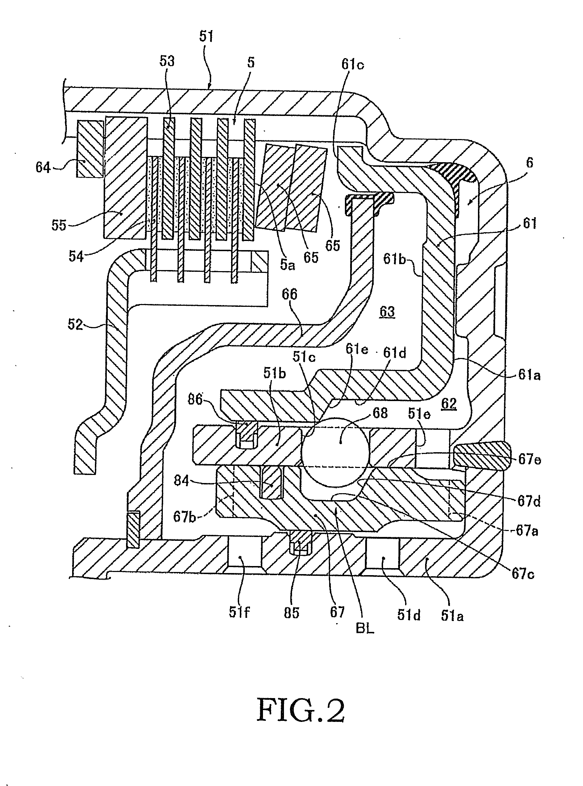

FIG. 2 shows a cross-section of the forward clutch 5 and a clutch operation pack 6 used to operate the forward clutch 5. Respective configurations thereof will be described below.

The forward clutch 5 includes a clutch drum 51, a clutch hub 52, a driven plate 53, a drive plate 54, and a retainer plate 55.

The clutch drum 51 and the clutch hub 52 are disposed coaxially. A rotary element (a shaft, a gear, or the like), not shown in the figure, is coupled to the clutch drum 51. A different rotary element (a shaft, a gear, or the like), not shown in the figure, is coupled to the clutch hub 52.

The driven plate 53 is attached to the clutch drum 51 by a spline engagement so as to be free to slide in an axial direction. The drive plate 54 is attached to the clutch hub 52 by a spline engagement so as to be free to slide in the axial direction. Four driven plates 53 and four drive plates 54 are disposed alternately, and clutch facings are adhered to frictional surfaces on respective sides of the drive plates 54.

The clutch drum 51 transmits rotation input from the rotary element coupled to the clutch drum 51 to the clutch hub 52 via the driven plates 53 and the drive plates 54.

The retainer plate 55 is interposed between the drive plate 54 disposed on an end portion on an opposite side to a hydraulic piston 61 and a snap ring 64 fixed to a groove formed in an inner periphery of the clutch drum 51. One surface of the retainer plate 55 is a frictional surface. Further, the retainer plate 55 has a greater axial direction thickness than the driven plates 53 in order to prevent the driven plates 53 and the drive plates 54 from toppling over.

The clutch operation pack 6 includes the hydraulic piston 61, an ON pressure piston chamber 62, an OFF pressure piston chamber 63, the snap ring 64, a diaphragm spring 65, a partition plate 66, and the lock mechanism BL.

The hydraulic piston 61 is disposed to be capable of displacing in the axial direction relative to the forward clutch 5. One surface of the hydraulic piston 61 serves as an ON pressure receiving surface 61a, and another surface serves as an OFF pressure receiving surface 61b.

The ON pressure piston chamber 62 is defined between the clutch drum 51 and the hydraulic piston 61 in order to exert the ON pressure on the ON pressure receiving surface 61a of the hydraulic piston 61.

The OFF pressure piston chamber 63 is defined between the partition plate 66, which is fixed to the clutch drum 51, and the hydraulic piston 61 in order to exert the OFF pressure on the OFF pressure receiving surface 61b of the hydraulic piston 61.

The snap ring 64 is disposed in a position on an opposite side of the forward clutch 5 to the hydraulic piston 61 in order to support the forward clutch 5 in the axial direction.

The diaphragm spring 65 is interposed between a clutch side end surface 61c of the hydraulic piston 61 and a piston side end surface 5a of the forward clutch 5. Two diaphragm springs 65 overlapping in the axial direction are disposed so that when the hydraulic piston 61 is moved in an engagement direction toward the snap ring 64, an engagement force is exerted on the forward clutch 5.

The lock mechanism BL is built into the clutch drum 51, and constituted by the hydraulic piston 61, a ball holding piston 67, and a ball 68.

The hydraulic piston 61 is disposed to be capable of displacing in the axial direction relative to the forward clutch 5. The hydraulic piston 61 is provided with a housing portion 61 d and a tapered surface 61e. The housing portion 61d houses the ball 68 when movement of the hydraulic piston 61 in a disengagement direction is restricted. The tapered surface 61e is formed continuously with the housing portion 61 d so that when the hydraulic piston 61 strokes in the disengagement direction, the ball 68 is pushed inward.

The ball holding piston 67 is disposed in a cylindrical space defined by an inner peripheral cylindrical portion 51 a of the clutch drum 51 that covers the hydraulic piston 61 and a partitioning cylindrical wall portion 51b that projects from the clutch drum 51 in the axial direction. The ball holding piston 67 moves in the axial direction when the ON pressure or the OFF pressure acts thereon. An outer peripheral surface of the ball holding piston 67 is sealed from the partitioning cylindrical wall portion 51b by a seal ring 84, an inner peripheral surface of the ball holding piston 67 is sealed from the inner peripheral cylindrical portion 51a by a seal ring 85, and an inner peripheral surface of the hydraulic piston 61 is sealed from the partitioning cylindrical wall portion 51b by a seal ring 86. As a result, the ON pressure piston chamber 62 and the OFF pressure piston chamber 63 are defined on either side of the hydraulic piston 61.

An ON pressure port 51d opened in the clutch drum 51 communicates with the ON pressure piston chamber 62 via an ON pressure connecting groove 67a formed in the ball holding piston 67 and an ON pressure connecting hole 51e opened in the partitioning cylindrical wall portion 51b. An OFF pressure port 51f opened in the clutch drum 51 communicates with the OFF pressure piston chamber 63 via an OFF pressure connecting groove 67b formed in the ball holding piston 67 and an OFF pressure connecting gap secured between an end portion of the partitioning cylindrical wall portion 51 b and the partitioning plate 66.

The ball holding piston 67 is provided with a housing portion 67c, a tapered surface 67d, and a locking surface 67e. The housing portion 6c houses the ball 68 when movement of the hydraulic piston 61 in the disengagement direction is permitted. The tapered surface 67d and the locking surface 67e are formed continuously with the housing portion 67c so that when the ball holding piston 67 strokes in a direction heading toward the forward clutch 5, the tapered surface 67d pushes the ball 68 outward and the locking surface 67e locks the pushed-out ball 68 in position.

The ball 68 is provided in a ball hole 51c opened in the partitioning cylindrical wall portion 51b. The ball 68 moves in a radial direction between a locking position and a lock release position upon reception of a force from the respective tapered surfaces 61 e, 67d of the hydraulic piston 61 and the ball holding piston 67, which is generated as the pistons 61, 67 move in the axial direction in response to exertion thereon of the ON pressure or the OFF pressure.

According to the configuration described above, when the ON pressure is exerted on the ON pressure piston chamber 62, the hydraulic piston 61 moves in the engagement direction approaching the forward clutch 5, and as a result, the forward clutch 5 is engaged by a biasing force of the compressed diaphragm spring 65. When the hydraulic piston 61 moves in the engagement direction, the ball 68 is moved in an outward radial direction by a centrifugal force generated by rotation and the oil pressure, and as a result, the ball 68 is housed in the housing portion 61d. When the ON pressure acts on the ball holding piston 67, the ball holding piston 67 moves in the axial direction (the direction heading toward the forward clutch 5), and as a result, the ball 68 held in the housing portion 67c is held by the locking surface 67e.

Hence, the lock mechanism BL is locked so that movement of the hydraulic piston 61 in the disengagement direction is restricted, and as a result, the forward clutch 5 is maintained in the engaged condition even when the ON pressure is drained. The ON pressure is supplied to the ON pressure piston chamber 62 only during the engagement operation, and a supply of the ON pressure is not required to maintain the forward clutch 5 in the engaged condition.

Control performed by the transmission controller 9 to supply and discharge the ON pressure as described above will be referred to as engagement control, and the transmission controller 9 executes the engagement control when the D mode is selected by the select switch 11.

Further, when the OFF pressure is exerted on the OFF pressure piston chamber 63, the ball holding piston 67 moves in the axial direction (a direction heading away from the forward clutch 5) from a holding position in which the ball 68 is held by the locking surface 67e to a hold release position. A resultant force of a force generated by the OFF pressure and a reaction force to an engagement force generated by the diaphragm spring 65 acts on the hydraulic piston 61 so that the hydraulic piston 61 strokes in a return direction and the ball 68 is pushed back in a lock release direction. When the ball 68 moves to the lock release position, the lock mechanism BL is unlocked.

When the forward clutch 5 is disengaged, the ON pressure is at zero, and therefore the ball 68 remains housed in the housing portion 67c of the ball holding piston 67 even after the OFF pressure is drained. The OFF pressure is supplied to the OFF pressure piston chamber 63 only during the disengagement operation, and a supply of the OFF pressure is not required to maintain the forward clutch 5 in the disengaged condition.

Control performed by the transmission controller 9 to supply and discharge the OFF pressure as described above will be referred to as disengagement control, and the transmission controller 9 executes the disengagement control when a mode other than the D mode is selected by the select switch 11.

Further, the transmission controller 9 determines whether or not the lock mechanism BL is locked in accordance with the supply of the ON pressure during the engagement control. As described above, when the D mode is selected, the ON pressure is supplied to the lock mechanism BL, and the ball holding piston 67 moves in the axial direction in response to exertion of the ON pressure. Therefore, when the lock mechanism BL is locked, the ON pressure decreases in accordance with an increase in a capacity of the ON pressure piston chamber 62, which occurs when the ball holding piston 67 moves following engagement of the clutch by the hydraulic piston 61. The transmission controller 9 therefore determines that the lock mechanism BL is locked when the oil pressure sensor 103 detects a reduction in the ON pressure during supply of the ON pressure.

Incidentally, as described above, the transmission controller 9 executes the disengagement control when a mode other than the D mode has been selected by the select switch 11. Therefore, in a case where the D mode and a mode other than the D mode are selected repeatedly at short time intervals due to an erroneous operation or the like so that a mode other than the D mode is selected and the OFF pressure is supplied before the lock mechanism BL is locked in the D mode, a residual pressure of the OFF pressure forms resistance to the ON pressure supplied when the D mode is selected subsequently, and as a result, engagement of the forward clutch 5 is delayed.

Hence, the transmission controller 9 prevents a delay in engagement of the forward clutch 5 when the D mode is finally selected by performing control to be described below in a case where an operation is performed to switch to the D mode from a mode other than the D mode and a case where an operation is performed to switch from the D mode to a mode other than the D mode, respectively.

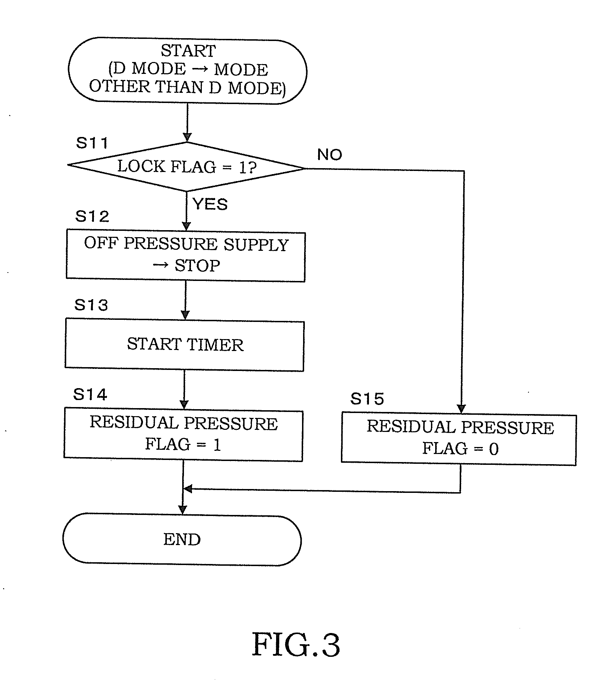

FIG. 3 is a flowchart showing content of control executed by the transmission controller 9 when the select switch 11 is operated from the D mode to a mode other than the D mode.

When the select switch 11 is operated from the D mode to a mode other than the D mode, first, the transmission controller 9 determines whether or not a lock flag = 1 (S 11). The lock flag will be described below, but when the lock flag = 1, the lock mechanism BL is locked, and when the lock flag = 0, the lock mechanism BL is unlocked.

After determining in S11 that the lock flag = 1, the transmission controller 9 releases the lock mechanism BL from the locked condition by supplying the OFF pressure, and then stops the supply of the OFF pressure (starts to discharge the OFF pressure) and starts a timer in order to measure an elapsed time following stoppage of the supply of the OFF pressure (S12, S13). Further, a residual pressure flag is set at 1 (S14).

After determining in S11 that the lock flag = 0, the transmission controller 9 sets the residual pressure flag at 0 (S15). In this case, the lock mechanism BL is unlocked and the ON pressure is at zero, and therefore the forward clutch 5 is disengaged by the biasing force of the diaphragm spring 65 without supplying the OFF pressure.

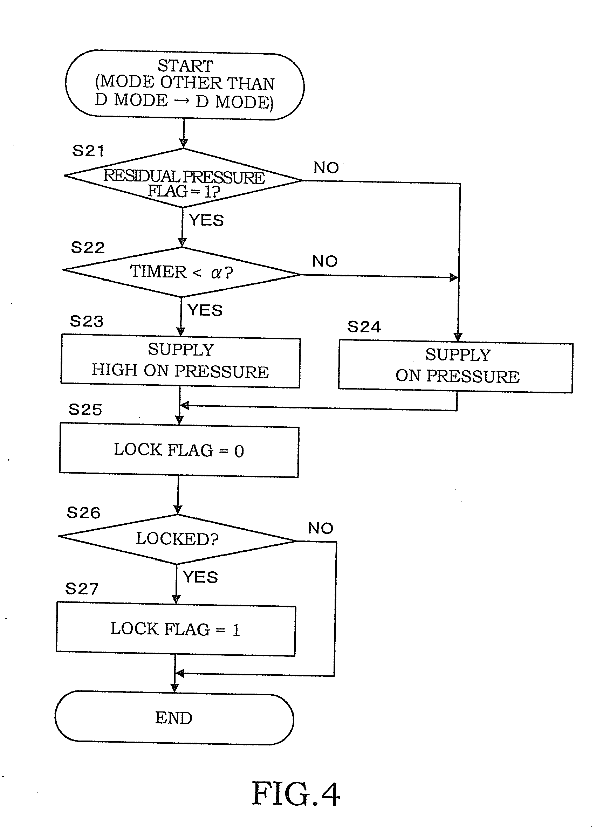

FIG. 4 is a flowchart showing content of control executed by the transmission controller 9 when the select switch 11 is operated from a mode other than the D mode to the D mode.

When the select switch 11 is operated from a mode other than the D mode to the D mode, first, the transmission controller 9 determines whether or not the residual pressure flag = 1 (S21).

When the residual pressure flag = 1, the processing advances to S22. When the residual pressure flag = 0, the processing advances to S24.

In S22, the transmission controller 9 determines whether or not a measured time after starting the timer in S 13 is shorter than a determination time α. The determination time α is a time extending to a point at which the residual pressure of the OFF pressure reaches zero after the supply of the OFF pressure is stopped and the OFF pressure is drained. A time required for the oil pressure to decrease is dependent on an oil temperature, and therefore the determination time α is determined in advance by experiment on the basis of a relationship between the measured oil temperature and the pressure reduction time.

When the measured time of the timer is shorter than the determination time α, the transmission controller 9 supplies a High ON pressure, which is higher than the normal ON pressure (S23), and sets the lock flag at 0 (S25). The High ON pressure is an ON pressure obtained by adding an oil pressure required to cancel out the resistance generated by the residual pressure of the OFF pressure to the normal ON pressure. The residual pressure of the OFF pressure is dependent on the oil temperature and the elapsed time following stoppage of the supply of the OFF pressure, and therefore the High ON pressure is determined in advance by experiment on the basis of a relationship between the measured oil pressure, the elapsed time following stoppage of the supply of the OFF pressure, and the residual pressure of the OFF pressure.

When the measured time of the timer equals or exceeds the determination time α, the transmission controller 9 supplies the normal ON pressure (S24), and sets the lock flag at 0 (S25). Further, when the residual pressure flag = 0 in S21, the transmission controller 9 supplies the normal ON pressure (S24), and sets the lock flag at 0 (S25).

In S26, the transmission controller 9 determines whether or not the lock mechanism BL has been locked by the supply of the High ON pressure in S23 or the supply of the ON pressure in S24.

As described above, when the lock mechanism BL is locked, the ON pressure decreases in accordance with an increase in the capacity of the ON pressure piston chamber 62, which occurs when the ball holding piston 67 moves following engagement of the clutch by the hydraulic piston 61. The transmission controller 9 therefore determines that the lock mechanism BL is locked when a reduction in the ON pressure is detected by the oil pressure sensor 103 during supply of the ON pressure.

After determining that the lock mechanism BL is locked, the transmission controller 9 sets the lock flag at 1 (S27). When the lock mechanism BL is not locked, the lock flag remains set at 0.

According to this embodiment, when the select switch 11 is operated from the D mode to a mode other than the D mode and the lock mechanism BL is not locked, the OFF pressure is not supplied. Hence, when the select switch 11 is operated from the mode other than the D mode to the D mode thereafter such that the ON pressure is supplied, the residual pressure of the OFF pressure does not form resistance, and as a result, engagement of the forward clutch 5 is not delayed (effects corresponding to Claims 1 and 4).

Further, when the select switch 11 is operated from the D mode to a mode other than the D mode and the lock mechanism BL is locked, the OFF pressure is supplied. Hence, when the select switch 11 is operated from the mode other than the D mode to the D mode thereafter such that the ON pressure is supplied, the residual pressure of the OFF pressure forms resistance, but since the High ON pressure, which is obtained by adding the oil pressure required to cancel out the resistance generated by the residual pressure of the OFF pressure to the normal ON pressure in accordance with the residual pressure of the OFF pressure, is supplied, engagement of the forward clutch 5 is not delayed (effects corresponding to Claims 2 and 3).

An embodiment of this invention was described above, but the above embodiment is merely one example of an application of this invention, and the technical scope of this invention is not limited to the specific configurations of the above embodiment.

For example, the specific configuration of the forward clutch 5 shown in FIG. 2 is an example of a friction element having a lock mechanism. However, this invention may be applied to a friction element having a lock mechanism configured otherwise. For example, this invention may be applied to the reverse brake 4 having a lock mechanism.

Further, in the above embodiment, the D mode is set as the travel mode of the select switch 11, and a mode other than the D mode is set as the non-travel mode. However, the non-travel mode may include the P mode, the R mode, and the N mode such that when this invention is applied to the reverse brake 4 having a lock mechanism, the travel mode is the R mode, and the non-travel mode includes the P mode, the N mode, and the D mode.

Furthermore, the determination as to whether or not the lock mechanism BL is locked is made by detecting a reduction in the ON pressure, but instead, the determination may be made by detecting the position of the ball holding piston 67 using a stroke sensor.

With respect to the above description, the contents of application No. 2012-212174, with a filing date of September 26, 2012 in Japan, are incorporated herein by reference.

## Claims

1. An automatic transmission comprising:
a friction element that is disposed on a power transmission path so as to be engaged when an ON pressure is supplied to an engagement side oil chamber, whereby a lock mechanism enters a locked condition, maintained in an engaged condition once the lock mechanism enters the locked condition even after an oil pressure in the engagement side oil chamber is reduced, disengaged when an OFF pressure is supplied to a disengagement side oil chamber while the lock mechanism is in the locked condition, whereby the lock mechanism enters an unlocked condition, and maintained in a disengaged condition even after an oil pressure in the disengagement side oil chamber is reduced;
a select switch capable of selecting a travel mode or a non-travel mode as a mode of the automatic transmission; and
a control unit configured to perform engagement control when the travel mode is selected by the select switch in order to set the lock mechanism in the locked condition by supplying the ON pressure to the engagement side oil chamber and then reduce the oil pressure in the engagement side oil chamber, and perform disengagement control when the non-travel mode is selected by the select switch in order to set the lock mechanism in the unlocked condition by supplying the OFF pressure to the disengagement side oil chamber and then reduce the oil pressure in the disengagement side oil chamber,
wherein the control unit is configured to determine whether or not the lock mechanism is in the locked condition when the non-travel mode is selected by the select switch, and does not supply the OFF pressure to the disengagement side oil chamber when it is determined that the lock mechanism is not in the locked condition.

2. The automatic transmission as defined in Claim 1, wherein the control unit is configured to supply a High ON pressure that is higher than the ON pressure to the engagement side oil chamber, when the travel mode is selected by the select switch after the OFF pressure is supplied to the disengagement side oil chamber in the non-travel mode, and a residual pressure of the OFF pressure remains.

3. The automatic transmission as defined in Claim 2, wherein the control unit is configured to supply a steadily higher ON pressure to the engagement side oil chamber as the residual pressure of the OFF pressure increases.

4. A control method for an automatic transmission, the automatic transmission comprising:
a friction element that is disposed on a power transmission path so as to be engaged when an ON pressure is supplied to an engagement side oil chamber, whereby a lock mechanism enters a locked condition, maintained in an engaged condition once the lock mechanism enters the locked condition even after an oil pressure in the engagement side oil chamber is reduced, disengaged when an OFF pressure is supplied to a disengagement side oil chamber while the lock mechanism is in the locked condition, whereby the lock mechanism enters an unlocked condition, and maintained in a disengaged condition even after an oil pressure in the disengagement side oil chamber is reduced; and
a select switch capable of selecting a travel mode or a non-travel mode as a mode of the automatic transmission,
the control method comprising:
performing an engagement control when the travel mode is selected by the select switch, in the engagement control the ON pressure being supplied to the engagement side oil chamber to set the lock mechanism in the locked condition and then the oil pressure in the engagement side oil chamber being reduced;
performing a disengagement control when the non-travel mode is selected by the select switch, in the disengagement control the OFF pressure being supplied to the disengagement side oil chamber to set the lock mechanism in the unlocked condition and then the oil pressure in the disengagement side oil chamber being reduced; and
determining whether or not the lock mechanism is in the locked condition when the non-travel mode is selected by the select switch,
wherein the OFF pressure is not supplied to the disengagement side oil chamber when it is determined that the lock mechanism is not in the locked condition.
